# FASCICULE DE BREVET EUROPEEN

(11) **EP 3 672 011 B1**
(45) Date de publication et mention de la délivrance du brevet: **26.10.2022**
(21) Numéro de dépôt: 19216819.3
(22) Date de dépôt: 17.12.2019
(51) Int. Cl.: H02J 3/46, H02J 3/24, H02J 3/28, H02J 3/38, H02J 3/48

(54) **PROCÉDÉ DE RÉGULATION D'UN RÉSEAU DE DISTRIBUTION ÉLECTRIQUE**
REGULIERVERFAHREN EINES STROMVERTEILUNGSNETZES
METHOD FOR REGULATING AN ELECTRICITY DISTRIBUTION NETWORK

(30) Priorité: 20.12.2018 FR 1873570
(43) Date de publication de la demande: 24.06.2020
(73) Titulaire: Schneider Electric Industries SAS, 92500 Rueil Malmaison (FR); Institut Polytechnique de Grenoble, 38031 Grenoble Cedex 1 (FR)
(72) Inventeur: GARBUIO, Lauric, 38950 SAINT MARTIN LE VINOUX (FR); BANJAR NAHOR, Kevin Marojahan, 38000 GRENOBLE (FR); DEBUSSCHERE, Vincent, 38000 GRENOBLE (FR); PHAM, Thi-Thu-Ha, 38050 GRENOBLE Cedex 09 (FR); HADJSAID, Nouredine, 38000 GRENOBLE (FR)
(74) Mandataire: Brevalex

(56) Documents cités:
- EP-A1- 2 600 479
- WO-A1-2018/122726
- CN-A- 106 385 054
- CN-A- 108 631 320
- CN-A- 108 808 699

## Description

### DOMAINE TECHNIQUE

La présente invention concerne un procédé de régulation d'un réseau de distribution électrique. En particulier, la présente invention propose un procédé de régulation d'un réseau de distribution électrique indépendant de la réserve primaire dont il dispose.

Notamment, la présente invention propose un procédé de régulation permettant d'assurer la stabilité du réseau quel que soit l'état de la réserve primaire.

Le procédé est particulièrement adapté pour la régulation d'un micro-réseau, notamment un micro-réseau présentant un taux de pénétration d'énergie renouvelable important.

### ÉTAT DE LA TECHNIQUE ANTÉRIEURE

La stabilité des réseaux de distribution électrique est une préoccupation permanente des exploitants desdits réseaux. Ces derniers sont alors traditionnellement conçus pour répondre à un critère dit « critère N-1 » qui leur permet de supporter la survenance d'un défaut sans incidence majeure sur la stabilité du réseau et ainsi éviter une situation de coupure électrique générale (« Black-out » selon la terminologie Anglo-Saxonne).

Afin de satisfaire le critère N-1, les réseaux interconnectés mettent en commun leurs sources de production d'énergie électrique et proposent des schémas de fonctionnement permettant de réagir de manière appropriée lorsqu'un défaut survient sur le réseau.

Il est alors prévu selon ces schémas de délester certaines charges, de démarrer d'autres sources d'énergie telles que des groupes électrogènes, ou des générateurs virtuels synchrones.

À cet égard, le respect du critère N-1 comprend le dimensionnement d'une réserve primaire d'énergie (« Spinning Reserve » selon la terminologie Anglo-Saxonne) suffisante pour répondre à un évènement donné et de manière immédiate dans le cadre d'une régulation primaire.

Cette régulation primaire implique notamment un ajustement, par statisme, de la fréquence ou la tension du réseau de distribution électrique afin de répondre à un appel de charge ou compenser un défaut survenant sur le réseau de distribution électrique.

Une régulation dite secondaire peut alors intervenir ultérieurement afin de rétablir le réseau de distribution électrique dans son état initial.

La réserve primaire est relativement flexible dès lors qu'elle est mise en œuvre par des sources de production d'énergie prévisibles et stables telles que des groupes électrogènes.

Toutefois, dès lors que la réserve primaire est insuffisante pour répondre soit à un appel de charge ou à un défaut sur le réseau, une régulation par statisme conduira inéluctablement à un black-out.

Par ailleurs, le dimensionnement d'une réserve primaire devient compliqué dès lors que les sources de production d'énergie électrique impliquent des sources intermittentes telles que des sources d'énergie renouvelable.

Cette complication est d'autant plus importante que le réseau de distribution électrique est un micro réseau fonctionnant de manière autonome.

En outre, les sources intermittentes ne présentent en générale qu'une faible inertie, et réagissent de manière dispersée et non coordonnée lors de la survenance d'un défaut ou d'un appel de charge exacerbant ainsi l'instabilité du réseau. Un tel comportement des sources intermittentes ne permet pas d'assurer la stabilité du réseau.

Enfin, la régulation par statisme peut générer des variations de flux et ainsi provoquer des dégradations au niveau de tous les équipements assurant le fonctionnement du réseau.

Il a pu être proposé de conférer aux sources intermittentes un caractère de générateur synchrone, dit générateur synchrone virtuel.

Toutefois, dans la mesure où il n'existe pas de norme régissant le fonctionnement des générateurs synchrones virtuels permettant à ces derniers d'assurer la stabilité d'un réseau, cette solution n'est pas toujours satisfaisante.

Un but de la présente invention est de proposer un procédé de contrôle d'un générateur permettant de garantir la stabilité du réseau de distribution électrique.

Un autre but de la présente invention est de proposer un procédé de contrôle d'un générateur permettant d'augmenter le taux de pénétration des sources d'énergie renouvelable.

Un autre but de la présente invention est de proposer un procédé de contrôle d'un générateur permettant de garantir la stabilité du réseau également lorsque la réserve primaire est insuffisante.

Enfin, un autre but de la présente invention est de proposer un procédé de contrôle d'un générateur offrant une protection contre la dégradation des différents équipements, notamment les équipements électrosensibles, assurant le fonctionnement du réseau.

De l'état de l'art concernant le domaine des procédés de régulation on connait également les documents EP 2 600 479 A1, CN 108808699, CN106385054, WO 2018/122726 A1 et CN 108631320.

### EXPOSÉ DE L'INVENTION

Les buts de la présente invention sont, au moins en partie, atteints par un procédé de régulation d'un réseau de distribution électrique qui comprend une source électrique dite source principale, parmi une ou plusieurs sources électriques, configurée pour imposer au réseau la tension V et la fréquence f d'une puissance P circulant sur le du réseau et auquel sont connectées une ou plusieurs charges.

Le procédé comprend, en cas de variation de l'une parmi la fréquence f ou la tension V détectée sur le réseau, lors d'une régulation primaire, une étape d'ajustement, par la source principale, de l'autre parmi la fréquence f et la tension V de manière à conserver le rapport de la tension V sur la fréquence f essentiellement constant.

Par « essentiellement constant », on entend un rapport pouvant présenter des variations de plus ou moins 5 % autour d'une valeur de consigne.

Ainsi, selon la présente invention, en réponse à un appel de charge ou à l'apparition d'un défaut sur le réseau, le maintien du rapport V/f permet d'assurer la stabilité du réseau sans considération relative à la réserve primaire.

Par ailleurs, dans la mesure où cette régulation est indépendante de la réserve primaire, il peut être considéré une contribution plus importante des énergies renouvelables, par exemple 100%.

En outre, un rapport V/F maintenu essentiellement constant permet de maintenir un flux constant dans les charges, notamment des équipements électrosensibles, et ainsi éviter une usure ou une surchauffe d'un moteur d'une charge.

Enfin, le procédé selon la présente invention peut être mis en œuvre sur un réseau de distribution électrique déjà existant.

Selon un mode de mise en œuvre, la source principale comprend un régulateur permettant d'exécuter l'étape d'ajustement.

Selon un mode de mise en œuvre, le régulateur mesure la fréquence f et la tension V du réseau de distribution, avantageusement, la mesure est effectuée à intervalles de temps réguliers.

Selon un mode de mise en œuvre, la source principale est intermittente.

Selon un mode de mise en œuvre, la source principale peut ne pas imposer de puissance, et comprendre par exemple un moteur dont l'arbre n'est pas connecté.

La source principale peut comprendre un système de stockage d'énergie, par exemple n volant d'inertie, une batterie....

Selon un mode de mise en œuvre, la source principale est une source d'énergie renouvelable, en particulier la source d'énergie renouvelable comprend au moins une source choisie parmi : une source d'énergie solaire, une source d'énergie éolienne, une source d'énergie.

Selon un mode de mise en œuvre, la source principale comprend un onduleur doté d'une loi de commande lui conférant un comportement de générateur synchrone de sorte que la source principale forme un générateur synchrone virtuel.

Selon un mode de mise en œuvre, l'au moins une source comprend également d'autres sources, avantageusement des sources intermittentes, encore plus avantageusement des sources d'énergie renouvelable.

Selon un mode de mise en œuvre, la régulation primaire est suivie d'une régulation secondaire permettant de restaurer la fréquence f et la tension V du réseau à des valeurs prédéterminées.

Selon un mode de mise en œuvre, une des sources électrique du réseau de distribution électrique dispose d'une réserve d'énergie primaire, le procédé comprenant, préalablement à l'étape d'ajustement, une étape d'évaluation de la réserve primaire au regard d'un appel de charge ou d'un défaut susceptible de survenir sur le réseau.

Selon un mode de mise en œuvre, dès lors que la réserve primaire est évaluée comme suffisante pour répondre à un appel de charge ou à un défaut, l'étape d'évaluation comprend également la mise en œuvre d'une régulation basée sur l'injection d'au moins une partie de la réserve primaire sur le réseau de manière à répondre à l'appel de charge ou au défaut.

L'invention concerne également un programme d'ordinateur, comprenant des instructions qui, lorsqu'il est exécuté par un calculateur, conduisent à mettre en œuvre le procédé de régulation selon l'invention.

L'invention concerne également une source électrique configurée pour imposer à un réseau la tension V et la fréquence f d'une puissance P circulant sur ledit réseau, et pourvue du programme d'ordinateur selon la présente invention.

### BRÈVE DESCRIPTION DES DESSINS

D'autres caractéristiques et avantages apparaîtrons dans la description qui va suivre des modes de mise en œuvre du procédé de régulation d'un réseau de distribution électrique selon l'invention, donnés à titre d'exemples non limitatifs, en référence aux dessins annexés dans lesquels :
La figure 1 est une représentation schématique d'un réseau de distribution électrique sur lequel la présente invention est susceptible d'être mise en œuvre ;
La figure 2 est une représentation en modules fonctionnels d'une source primaire et d'un régulateur susceptible d'être mis en œuvre dans le cadre de la présente invention ;
La figure 3A représente la tension délivrée (axe vertical) en fonction du temps (axe horizontal) par le générateur formant le réseau (courbe A1) et par le générateur synchrone (courbe B1) dans le cadre d'une première simulation de la présente invention ;
La figure 3B représente la puissance active délivrée (axe vertical) en fonction du temps (axe horizontal) par le générateur formant le réseau (courbe A2) et par le générateur synchrone (courbe B2) dans le cadre de la première simulation de la présente invention ;
La figure 3C représente la puissance réactive délivrée (axe vertical) en fonction du temps (axe horizontal) par le générateur formant le réseau (courbe A3) et par le générateur synchrone (courbe B3) dans le cadre de la première simulation de la présente invention ;
La figure 3D représente la fréquence f délivrée (axe vertical) en fonction du temps (axe horizontal) par le générateur formant le réseau (courbe A4) et par le générateur synchrone (courbe B4) dans le cadre de la première simulation de la présente invention ;
La figure 4A représente la puissance active (axe vertical) délivrée par un onduleur en fonction du temps (axe horizontal) dans le cadre d'une deuxième simulation de la présente invention ;
La figure 4B représente la fréquence de puissance (axe vertical) délivrée par un onduleur en fonction du temps (axe horizontal) dans le cadre de la deuxième simulation de la présente invention ;
La figure 4C représente le courant délivré (axe vertical) délivrée par un onduleur en fonction du temps (axe horizontal) dans le cadre de la deuxième simulation de la présente invention ;
La figure 4D représente la tension délivrée (axe vertical) délivrée deux onduleurs en fonction du temps (axe horizontal) dans le cadre de la deuxième simulation de la présente invention ;
La figure 5A représente la puissance active (axe vertical) délivrée par deux onduleurs en fonction du temps (axe horizontal) dans le cadre d'une troisième simulation de la présente invention ;
La figure 5B représente la fréquence de puissance (axe vertical) délivrée par deux onduleurs en fonction du temps (axe horizontal) dans le cadre de la troisième simulation de la présente invention ;
La figure 5C représente les courants délivrés (axe vertical) délivrée par deux onduleurs en fonction du temps (axe horizontal) dans le cadre de la troisième simulation de la présente invention ;
La figure 5D représente les tensions délivrées (axe vertical) délivrée deux onduleurs en fonction du temps (axe horizontal) dans le cadre de la troisième simulation de la présente invention.

### EXPOSÉ DÉTAILLÉ DE MODES DE RÉALISATION PARTICULIERS

La présente invention décrite de manière détaillée ci-dessous met en œuvre un procédé de régulation d'un réseau de distribution électrique pourvu d'une source, dite source principale, parmi une ou plusieurs sources d'énergie, configurée pour imposer au réseau la tension V et la fréquence f d'une puissance P circulant sur le réseau et destinée à être consommée par des charges.

En particulier, la source principale est adaptée pour maintenir constant le rapport de la tension V et de la fréquence f de la puissance P circulant sur le réseau.

Par « source électrique », on entend toute source susceptible de délivrer ou non un courant électrique, d'imposer une tension.

À titre d'exemple, une source électrique peut comprendre, et de manière non limitative, un générateur synchrone, un générateur asynchrone, une source de tension.

La présente invention, bien que décrite dans le contexte des réseaux de distribution électrique de manière générale, peut avantageusement être mise en œuvre au sein d'un micro-réseau.

Par « micro-réseau » (« microgrid » selon la terminologie Anglo-Saxonne), on entend un réseau électrique local destiné à produire et distribuer de l'énergie électrique dans des régions isolées et distantes des grands centres de production d'énergie électrique. Les régions isolées sont par exemples des îles, des régions montagneuses, ou encore des zones désertiques. Le principe de micro réseau s'applique également lorsqu'un bâtiment, quartier, campus, ou autre entité connectée à un large réseau de distribution souhaite gérer sa production d'énergie autrement et augmenter sa capacité de résilience.

Le principal intérêt des micro réseaux est qu'ils fonctionnent de manière autonome (en mode îloté, sans connexion au réseau public), et se trouvent à proximité des zones de consommation (les charges). Ainsi, les pertes inhérentes aux réseaux de distributions longues distances sont limitées.

Par ailleurs, selon la présente invention, un « réseau de distribution électrique » peut comprendre un réseau de distribution électrique ou un réseau de transport électrique ou encore un réseau de répartition électrique.

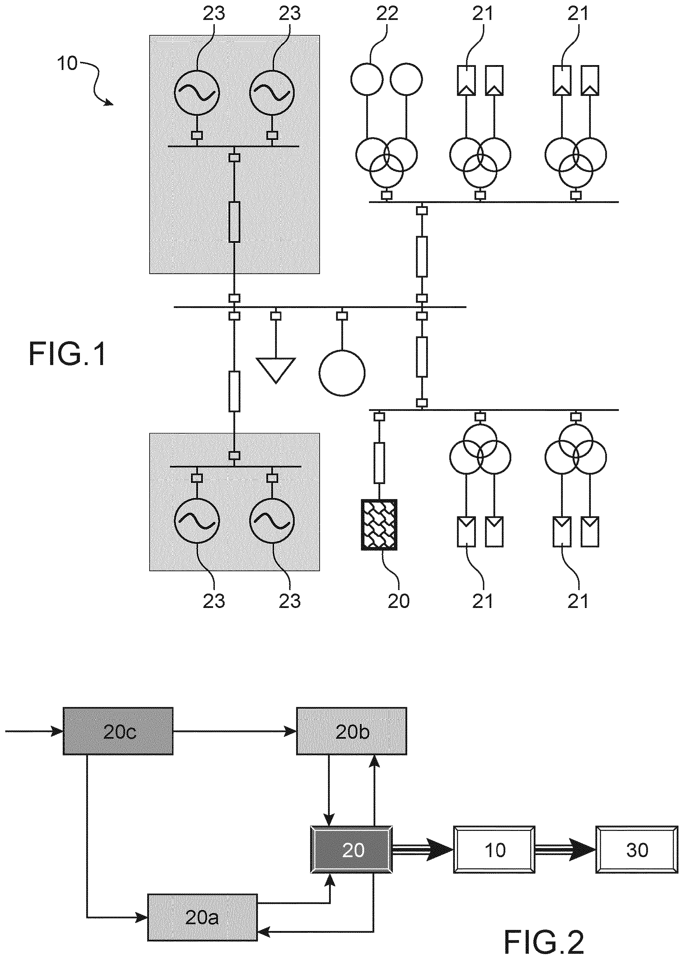

L'invention est maintenant décrite en détails en relation avec les figures 1, 2, 3A à 3D, 4A à 4D, et 5A à 5D.

La figure 1 représente un réseau de distribution électrique 10.

Le réseau de distribution électrique comprend une ou plusieurs sources électriques. Parmi l'une ou plusieurs sources électriques figure une source dite source principale 20 qui est configurée pour imposer au réseau la tension V et la fréquence f d'une puissance P circulant (ou distribuée) sur le réseau de distribution électrique 10.

En d'autres termes, la source principale 20 peut former le réseau.

La source principale 20 peut comprendre un générateur synchrone, notamment un groupe électrogène.

De manière alternative, la source principale 20 peut comprendre une source d'énergie intermittente. Plus particulièrement, la source d'énergie intermittente peut comprendre une source d'énergie renouvelable, et par exemple comprendre des panneaux photovoltaïques, des éoliennes, des hydroliennes, des machines thermodynamiques.

La source d'énergie intermittente peut être pourvue d'un onduleur (« inverter » selon la terminologie Anglo-Saxonne) doté d'une loi de commande conférant à la source d'énergie intermittente un comportement de générateur synchrone de sorte que la source principale forme un générateur synchrone virtuel.

L'une ou plusieurs sources peut également comprendre d'autres sources, avantageusement des sources intermittentes 21, encore plus avantageusement des sources d'énergie renouvelable. Par exemple, les sources d'énergie renouvelable peuvent comprendre des panneaux photovoltaïques, des éoliennes, des hydroliennes, des machines thermodynamiques.

De manière complémentaire ou alternative, l'au moins une source peut comprendre une ou plusieurs batteries 22.

Toujours de manière complémentaire ou alternative, l'une ou plusieurs sources peut comprendre un ou plusieurs générateurs 23, par exemple des générateurs synchrones, des générateurs asynchrones, ou une combinaison des deux.

Le procédé selon la présente invention comprend une étape de d'ajustement, dans le cadre d'une régulation primaire, qui maintient essentiellement constant le rapport de la tension V sur la fréquence f.

En particulier, dès lors que la fréquence f de la puissance électrique P circulant sur le réseau varie, l'étape d'ajustement comprend un ajustement de la tension V de manière à maintenir essentiellement constant le rapport de la tension V sur la fréquence f.

De manière équivalente, une variation de la tension V de la puissance électrique P circulant sur le réseau varie, l'étape d'ajustement comprend un ajustement de la fréquence f de manière à maintenir essentiellement constant le rapport de la tension V sur la fréquence f.

De telles variations de fréquence et/ou de tension de la puissance P circulant sur le réseau de distribution électrique peuvent intervenir lors d'appels de charge ou lors de l'apparition d'un défaut.

Cette régulation est mise en œuvre par la source principale qui est en mesure de former le réseau.

À cet égard, la source principale 20 peut comprendre un régulateur R configuré pour assurer la régulation selon les termes de l'invention.

En particulier, le régulateur peut mesurer la fréquence f et la tension V de la puissance électrique P.

De manière particulièrement avantageuse, la mesure est effectuée à intervalles de temps réguliers, par exemple toutes les secondes.

Cette mesure permet d'établir l'état du réseau et également de détecter la survenance d'un évènement tel qu'un appel de charge ou l'apparition d'un défaut.

La figure 2 est une représentation schématique de la mise en œuvre de la régulation selon la présente invention.

En particulier, la figure 2 représente une source principale 20 connectée à un réseau de distribution électrique 10 distribuant une puissance P à une charge 30.

La source principale 20 est associée à un régulateur pourvu de sous-modules, et notamment un module de régulation de la fréquence 20a, un module de régulation de la tension 20b et un module de contrôle 20c du module de régulation de la fréquence 20a et du module de régulation de la tension 20b.

Le module de régulation de la fréquence 20a impose à la source principale 20 d'ajuster la fréquence d'une puissance circulant sur le réseau à une fréquence donnée.

Le module de régulation de la tension 20b impose à la source principale 20 d'ajuster la tension d'une puissance circulant sur le réseau à une tension donnée.

Le module de contrôle 20c indique au module de fréquence 20a et au module de régulation de tension 20b, respectivement, la fréquence f et la tension V que la source primaire doit imposer au réseau.

De manière avantageuse, la mesure de la tension V et de la fréquence f de la puissance P circulant sur le réseau sont mesurées par le module de contrôle 20c.

La régulation ainsi proposée permet de préserver un équilibre entre puissance consommée et puissance produite à tout instant indépendamment de l'état d'une éventuelle réserve primaire.

La régulation peut également incorporer une modulation de la fréquence et/ou de la tension par statisme si une réserve primaire suffisante est immédiatement disponible pour répondre à un évènement donné.

La régulation proposée selon la présente invention est également avantageuse dans la mesure où elle ne requiert pas de communication entre les différents équipements, et notamment les sources d'énergies, connectés au réseau.

La régulation primaire peut être suivie d'une régulation secondaire permettant de restaurer la fréquence f et la tension V du réseau à des valeurs prédéterminées.

L'invention concerne également un programme d'ordinateur, comprenant des instructions qui, lorsqu'il est exécuté par un calculateur, conduisent à mettre en œuvre le procédé selon la présente invention.

L'invention concerne également une source d'énergie configurée pour imposer à un réseau la tension V et la fréquence f d'une puissance P circulant sur ledit réseau, et pourvue du programme d'ordinateur selon la présente invention.

Le procédé selon la présente invention a fait l'objet de différentes simulations.

Selon un premier exemple, les inventeurs ont simulé le comportement d'une combinaison d'un générateur formant le réseau (ou « grid former » selon la terminologie Anglo-Saxonne) et d'un générateur synchrone.

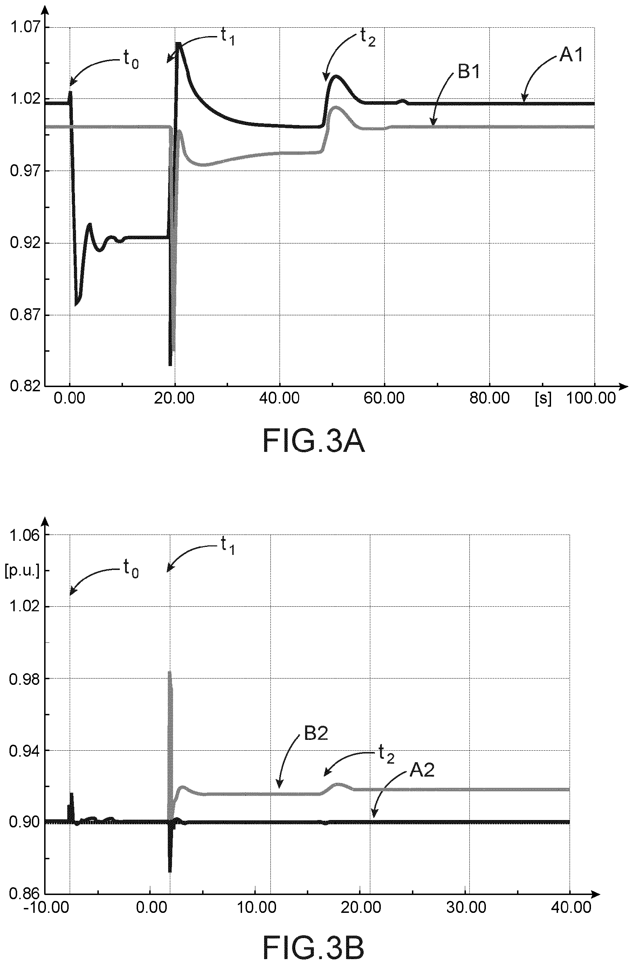

À cet égard, les figures 3A à 3D représentent les résultats relatifs à la simulation numérique de la régulation d'un réseau à la suite d'une chute de la puissance active sur ledit réseau à un instant t=t₀.

En particulier, la figure 3A représente la tension délivrée (axe vertical) en fonction du temps (axe horizontal) par le générateur formant le réseau (courbe A1) et par le générateur synchrone (courbe B1).

La figure 3B représente la puissance active délivrée (axe vertical) en fonction du temps (axe horizontal) par le générateur formant le réseau (courbe A2) et par le générateur synchrone (courbe B2).

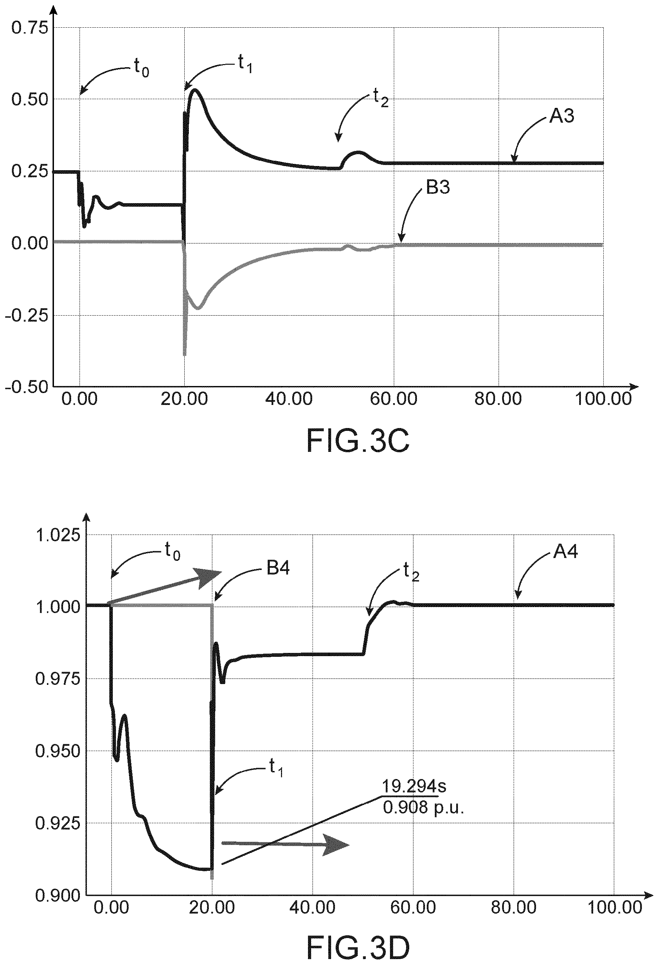

La figure 3C représente la puissance réactive délivrée (axe vertical) en fonction du temps (axe horizontal) par le générateur formant le réseau (courbe A3) et par le générateur synchrone (courbe B3).

La figure 3D représente la fréquence f délivrée (axe vertical) en fonction du temps (axe horizontal) par générateur formant le réseau (courbe A4) et par le générateur synchrone (courbe B4).

A t=t₀, la tension (courbe A1 figure 3A) et la puissance réactive (courbe A3 figure 3C) délivrées par le générateur formant le réseau chutent d'environ 10%. A partir de cet instant, le générateur synchrone est mis en route et synchronisé avec le réseau à l'instant t₁ = t₀+20s (courbes B1, B2, B3, B4).

A l'instant t₁, le générateur synchrone ajuste la fréquence f de la puissance électrique qu'il délivre sur le réseau afin de maintenir le rapport V/f à une valeur prédéterminée correspondant au rapport de la tension de consigne et de la fréquence de consigne du réseau. Cet ajustement se déroule lors de la phase de régulation primaire qui s'étend entre l'instant t₁ et un instant t₂ = t₀ + 50s.

Selon un deuxième exemple, les inventeurs ont simulé le comportement d'un onduleur formant le réseau.

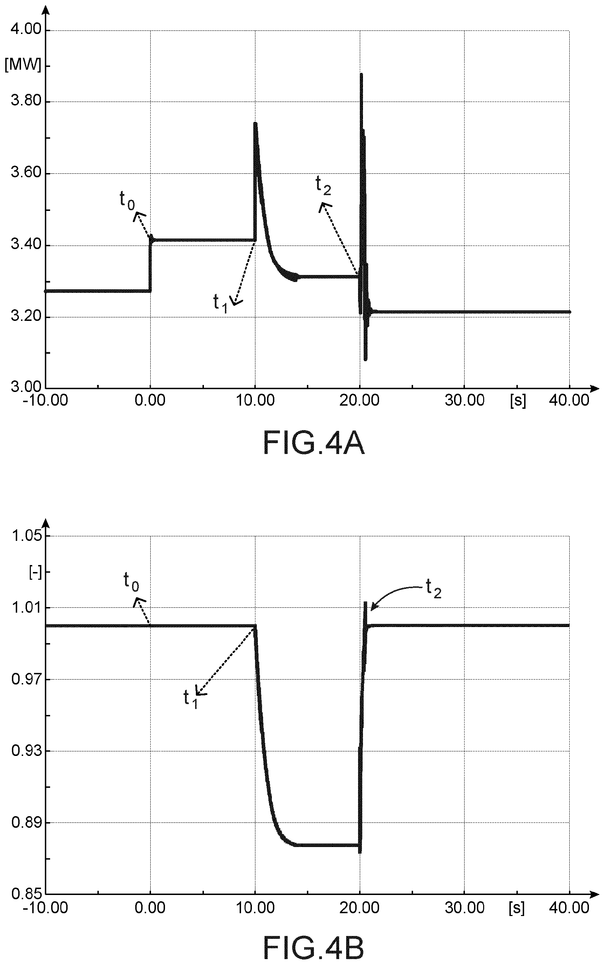

La figure 4A représente la puissance active délivrée par l'onduleur (axe vertical) en fonction du temps (axe horizontal).

La figure 4B représente la fréquence de puissance délivrée par l'onduleur (axe vertical) en fonction du temps (axe horizontal).

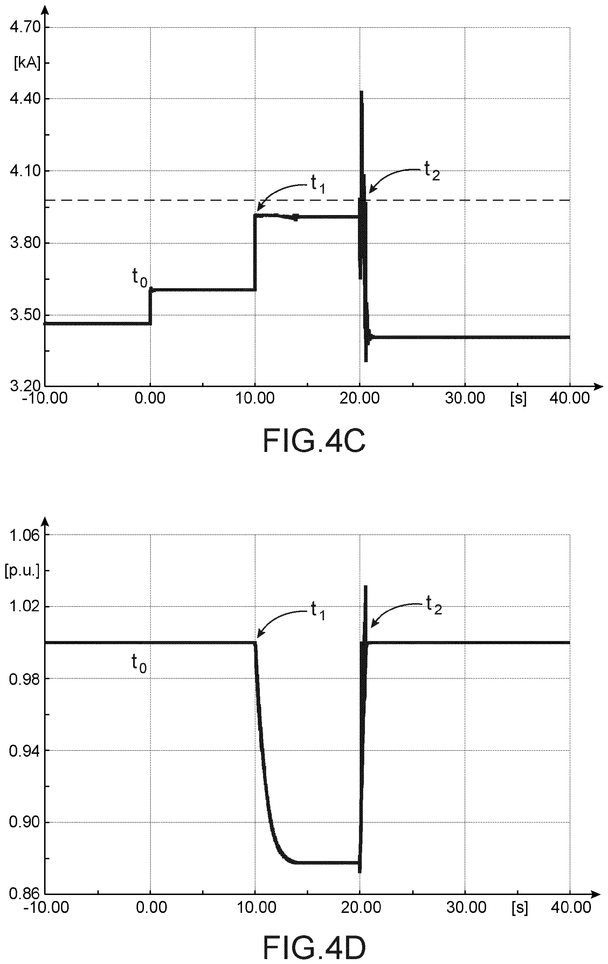

La figure 4C représente le courant délivré par l'onduleur (axe vertical) en fonction du temps (axe horizontal).

La figure 4D représente la tension délivrée par l'onduleur (axe vertical) en fonction du temps (axe horizontal).

A l'instant t₀, un appel de charge 150kW intervient. L'onduleur dispose alors d'une réserve primaire suffisante pour y répondre par statisme.

À un instant t₁=t₀+10s, un défaut apparait sur le réseau. Ce dernier se matérialise par un appel de charge de 660 kW (figure 4A). La réserve primaire étant dans ce cas de figure insuffisante, l'onduleur ajuste à la fois la fréquence f (figure 4B) et la tension V (figure 4D) de la puissance qu'il délivre pendant la phase de régulation primaire qui s'étend entre l'instant t₁ et l'instant t₂=t₀+20s. Durant cette phase, l'ajustement est exécuté de manière à maintenir constant le rapport V/f selon les termes de la présente invention, et ainsi assurer la stabilité du réseau.

La phase de régulation secondaire débute à partir de l'instant t₂ afin de rétablir le réseau dans un état imposé par l'exploitant.

Selon un troisième exemple, les inventeurs ont simulé le comportement de deux onduleurs capables de former le réseau.

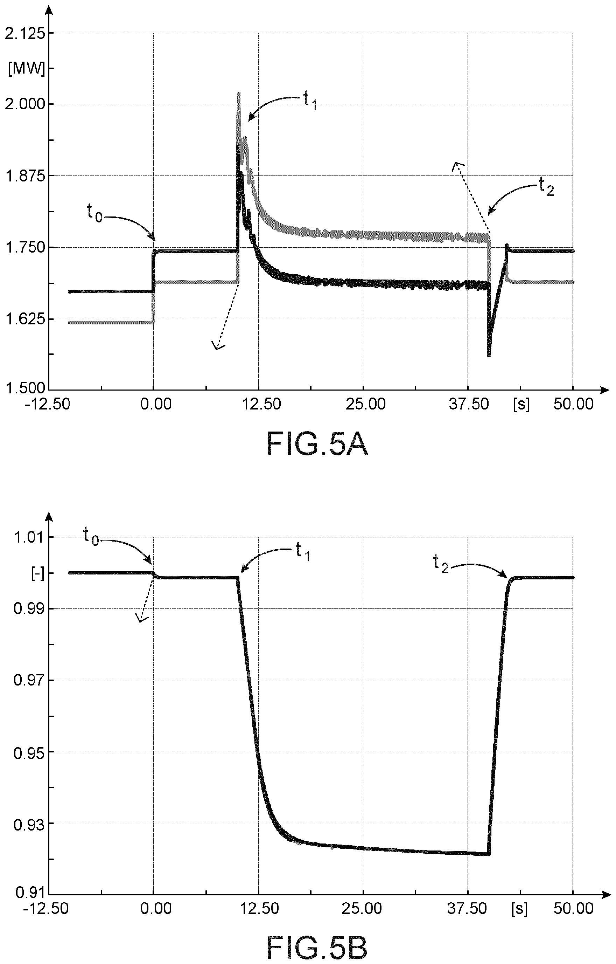

La figure 5A représente la puissance active (axe vertical) délivrée par chacun des onduleurs en fonction du temps (axe horizontal).

La figure 5B représente la fréquence de puissance (axe vertical) délivrée par chacun des onduleurs en fonction du temps (axe horizontal).

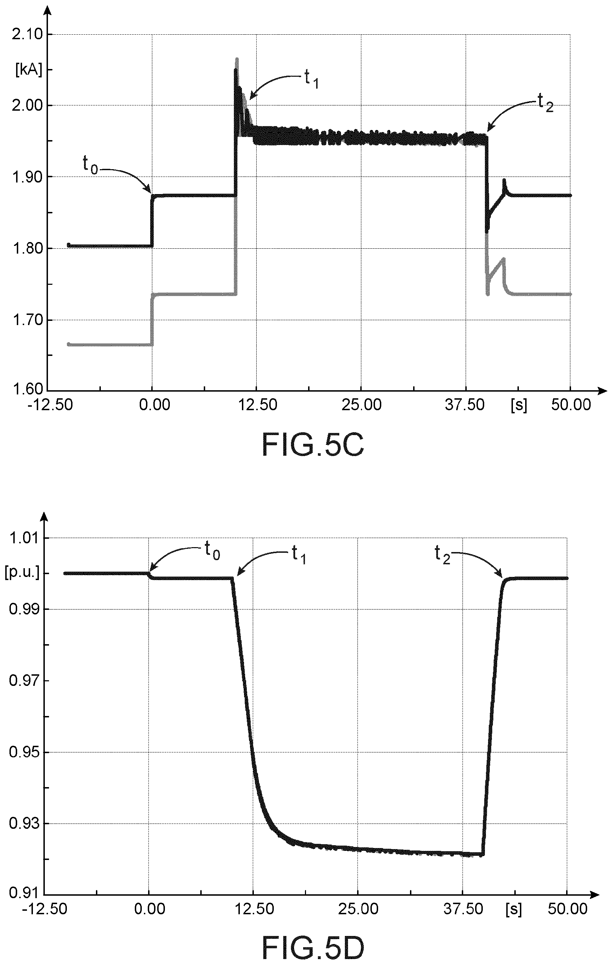

La figure 5C représente le courant délivré (axe vertical) délivrée par chacun des onduleurs en fonction du temps (axe horizontal).

La figure 5D représente la tension délivrée (axe vertical) délivrée par chacun des onduleurs en fonction du temps (axe horizontal).

A l'instant t₀, un appel de charge 150kW intervient. Les onduleurs ajustent alors chacun leur fréquence (figure 5B) et leur tension (figure 5D) de manière à conserver le rapport V/f essentiellement constant. Cette première régulation s'étend entre l'instant to et un instant t₁ = to + 10s à partir duquel le réseau subit un deuxième appel de charge de 495 kW (figure 5A).

À cet instant t₁= t₀+10s, les deux onduleurs régulent à nouveau la fréquence (figure 5B) et la tension (figure 5D) de manière à maintenir constant le rapport V/f selon les termes de la présente invention, et ainsi assurer la stabilité du réseau.

La phase de régulation secondaire débute à partir de l'instant t₂ afin de rétablir le réseau dans un état imposé par l'exploitant.

Ces simulations démontrent que la régulation selon les termes de l'invention peut être mise en œuvre sur des réseaux alimentés par une ou plusieurs sources d'énergie, et notamment un ou plusieurs onduleurs capables de former le réseau.

Le caractère universel de la méthode proposée rend son application possible dans bon nombre de réseaux de distribution préexistants.

## Revendications

1. Procédé de régulation d'un réseau de distribution électrique (10) qui comprend une source électrique dite source principale (20), parmi une ou plusieurs sources électriques, configurée pour imposer au réseau la tension V et la fréquence f d'une puissance P circulant sur le réseau et auquel sont connectées une ou plusieurs charges,
**caractérisé en ce que**
le procédé comprend, en cas de variation de l'une parmi la fréquence f ou la tension V détectée sur le réseau, lors d'une régulation primaire, une étape d'ajustement, par la source principale (20), de l'autre parmi la fréquence f et la tension V, de manière à conserver le rapport de la tension V sur la fréquence f constant.

2. Procédé selon la revendication 1, dans lequel la source principale (20) comprend un régulateur permettant d'exécuter l'étape d'ajustement.

3. Procédé selon la revendication 2, dans lequel le régulateur mesure la fréquence f et la tension V du réseau de distribution, les mesures étant effectuées à intervalles de temps réguliers.

4. Procédé selon l'une des revendications 1 à 3, dans lequel la source principale (20) est intermittente.

5. Procédé selon la revendication 4, dans lequel la source principale (20) est une source d'énergie renouvelable, en particulier la source d'énergie renouvelable comprend au moins une source choisie parmi : une source d'énergie solaire, une source d'énergie éolienne, une source d'énergie.

6. Procédé selon la revendication 4 ou 5, dans lequel la source principale (20) comprend un onduleur doté d'une loi de commande lui conférant un comportement de générateur synchrone de sorte que la source principale (20) forme un générateur synchrone virtuel.

7. Procédé selon l'une des revendications 1 à 6, dans lequel le réseau de distribution électrique (10) comprend également d'autres sources, avantageusement des sources intermittentes (21), ou des sources d'énergie renouvelable.

8. Procédé selon l'une des revendications 1 à 7, dans lequel la régulation primaire est suivie d'une régulation secondaire permettant de restaurer la fréquence f et la tension V du réseau à des valeurs prédéterminées.

9. Procédé selon l'une des revendications 1 à 8, dans lequel une des sources électrique du réseau de distribution électrique (10) dispose d'une réserve d'énergie primaire, le procédé comprenant, préalablement à l'étape d'ajustement, une étape d'évaluation de la réserve primaire au regard d'un appel de charge ou d'un défaut susceptible de survenir sur le réseau.

10. Procédé selon la revendication 9, dans lequel dès lors que la réserve primaire est évaluée comme suffisante pour répondre à un appel de charge ou à un défaut, l'étape d'évaluation comprend également la mise en œuvre d'une régulation basée sur l'injection d'au moins une partie de la réserve primaire sur le réseau de manière à répondre à l'appel de charge ou au défaut.

11. Programme d'ordinateur, comprenant des instructions qui, lorsqu'il est exécuté par un calculateur, conduisent à mettre en œuvre le procédé selon l'une des revendications 1 à 10.

12. Source électrique configurée pour imposer à un réseau la tension V et la fréquence f d'une puissance P circulant sur ledit réseau, et pourvue du programme d'ordinateur selon la revendication 11.

## Patentansprüche

1. Verfahren zur Regelung eines Stromverteilungsnetzes (10), das unter einer oder mehreren Stromquellen eine Stromquelle, Hauptquelle (20) genannt, umfasst, die dazu ausgelegt ist, dem Netz die Spannung V und die Frequenz f einer Leistung P vorzugeben, die im Netz fließt, an welches eine oder mehrere Lasten angeschlossen sind,
**dadurch gekennzeichnet, dass**
im Falle einer Änderung eines aus im Netz erfasster Frequenz f und Spannung V das Verfahren bei einer Primärregelung einen Schritt umfasst, bei dem das andere aus Frequenz f und Spannung V mittels der Hauptquelle (20) so abgeglichen wird, dass das Verhältnis der Spannung V zur Frequenz f konstant gehalten wird.

2. Verfahren nach Anspruch 1, wobei die Hauptquelle (20) einen Regler zum Durchführen des Abgleichs enthält.

3. Verfahren nach Anspruch 2, wobei der Regler die Frequenz f und die Spannung V des Verteilungsnetzes misst, wobei die Messungen in regelmäßigen Zeitintervallen durchgeführt werden.

4. Verfahren nach einem der Ansprüche 1 bis 3, wobei die Hauptquelle (20) intermittierend ist.

5. Verfahren nach Anspruch 4, wobei die Hauptquelle (20) eine erneuerbare Energiequelle ist, wobei insbesondere die erneuerbare Energiequelle zumindest eine Quelle, ausgewählt aus Solarenergiequelle, Windenergiequelle, Energiequelle, umfasst.

6. Verfahren nach Anspruch 4 oder 5, wobei die Hauptquelle (20) einen Wechselrichter mit einem Regelungsgrundsatz enthält, der diesem ein Synchrongeneratorverhalten verleiht, so dass die Hauptquelle (20) einen virtuellen Synchrongenerator bildet.

7. Verfahren nach einem der Ansprüche 1 bis 6, wobei das Stromverteilungsnetz (10) auch andere Quellen, vorteilhafterweise intermittierende Quellen (21), oder erneuerbare Energiequellen umfasst.

8. Verfahren nach einem der Ansprüche 1 bis 7, wobei auf die Primärregelung eine Sekundärregelung folgt, bei der die Frequenz f und die Spannung V des Netzes auf vorbestimmte Werte zurückgesetzt werden können.

9. Verfahren nach einem der Ansprüche 1 bis 8, wobei eine der Stromquellen des Stromverteilungsnetzes (10) über eine Primärenergiereserve verfügt, wobei das Verfahren vor dem Schritt des Abgleichs einen Schritt der Bewertung der Primärreserve im Hinblick auf einen Lastabruf oder einen Fehler, der im Netz auftreten kann, umfasst.

10. Verfahren nach Anspruch 9, wobei dann, wenn die Primärreserve als ausreichend bewertet wird, um auf einen Lastabruf oder einen Fehler zu reagieren, der Bewertungsschritt auch die Durchführung einer Regelung umfasst, die auf der Einspeisung zumindest eines Teils der Primärreserve in das Netz beruht, um auf den Lastabruf oder den Fehler zu reagieren.

11. Computerprogramm, das Anweisungen enthält, die, wenn es von einem Rechner ausgeführt wird, zur Durchführung des Verfahrens nach einem der Ansprüche 1 bis 10 führen.

12. Stromquelle, die dazu ausgelegt ist, einem Netz die Spannung V und die Frequenz f einer in diesem Netz fließenden Leistung P vorzugeben, und die mit dem Computerprogramm nach Anspruch 11 versehen ist.

## Claims

1. A method for regulating an electrical distribution grid (10) which comprises an electrical source called main source (20), among one or more electrical sources, configured to dictate to the grid the voltage V and frequency f of a power P flowing in the grid, and to which one or more loads are connected,
**characterised in that**
the method comprises, in case of a variation in one of the frequency f and the voltage V detected in the grid, during a primary regulation, a step of adjusting, by the main source (20), the other of the frequency f and voltage V, so as to keep constant the ratio of the voltage V to the frequency f.

2. The method according to claim 1, wherein the main source (20) comprises a regulator for carrying out the adjustment step.

3. The method according to claim 2, wherein the regulator measures the frequency f and voltage V of the distribution grid, the measurements being performed at regular time intervals.

4. The method according to one of claims 1 to 3, wherein the main source (20) is intermittent.

5. The method according to claim 4, wherein the main source (20) is a renewable energy source, in particular the renewable energy source comprises at least one source selected from: a solar energy source, a wind energy source, an energy source.

6. The method according to claim 4 or 5, wherein the main source (20) comprises an inverter provided with a control law giving it a behaviour of synchronous generator so that the main source (20) forms a virtual synchronous generator.

7. The method according to one of claims 1 to 6, wherein the electrical distribution grid (10) also comprises other sources, advantageously intermittent sources (21), or renewable energy sources.

8. The method according to one of claims 1 to 7, wherein the primary regulation is followed by a secondary regulation for restoring the frequency f and voltage V of the grid to predetermined values.

9. The method according to one of claims 1 to 8, wherein one of the electrical sources of the electrical distribution grid (10) has a spinning reserve available, the method comprising, prior to the adjustment step, a step of evaluating the spinning reserve in relation to a load request or a defect likely to occur in the grid.

10. The method according to claim 9, wherein as long as the spinning reserve is evaluated as being sufficient to meet a load request or a defect, the evaluation step also comprises implementing a regulation based on injection of at least part of the spinning reserve to the grid so as to meet the load request or the defect.

11. A computer programme, comprising instructions which, when run by a calculator, cause the method according to one of claims 1 to 10 to be implemented.

12. An electrical source configured to dictate to a grid the voltage V and frequency f of a power P flowing in said grid, and provided with the computer programme according to claim 11.
